# EUROPÄISCHE PATENTANMELDUNG

(11) **EP 3 996 163 A1**
(43) Veröffentlichungstag der Anmeldung: **11.05.2022**
(21) Anmeldenummer: 21204768.2
(22) Anmeldetag: 26.10.2021
(51) Int. Cl.: H01M 4/04

(54) **VERFAHREN ZUR HERSTELLUNG EINER ELEKTRODE EINER BATTERIE**

(30) Priorität: 05.11.2020 DE 102020213941
(71) Anmelder: VOLKSWAGEN AG, 38440 Wolfsburg (DE)
(72) Erfinder: JORDAN, Marco, 38229 Salzgitter (DE)
(74) Vertreter: FDST Patentanwälte

(57) **Zusammenfassung**

Die Erfindung betrifft ein Verfahren (36) zur Herstellung einer Elektrode (16) einer Batterie (14). Ein in einer Ausdehnungsebene (27) angeordneter flächiger metallischer Träger (24) wird bereitgestellt, und in einen Rand (32) des Trägers (24) wird eine Struktur (34) senkrecht zur Ausdehnungsebene (27) eingebracht. Die Erfindung betrifft ferner eine Elektrode (16) einer Batterie (14) und eine Vorrichtung (38).

## Beschreibung

Die Erfindung betrifft ein Verfahren zur Herstellung einer Elektrode einer Batterie. Ferner betrifft die Erfindung eine Elektrode einer Batterie und eine Vorrichtung zur Durchführung eines Verfahrens zur Herstellung einer Elektrode. Die Batterie ist beispielsweise ein Bestandteil eines Kraftfahrzeugs, insbesondere einer Hochvoltbatterie des Kraftfahrzeugs.

In zunehmendem Maße werden Kraftfahrzeuge zumindest teilweise mittels eines Elektromotors angetrieben, sodass diese als Elektrofahrzeug oder Hybridfahrzeug ausgestaltet sind. Zur Bestromung des Elektromotors wird üblicherweise eine Hochvoltbatterie herangezogen, die mehrere einzelne Batterien, auch als Batteriezellen bezeichnet, aufweist. Diese sind miteinander elektrisch in Reihe und/oder parallel geschaltet, sodass die an der Hochvoltbatterie anliegende elektrische Spannung einem Vielfachen der mittels jeder der Batterien bereitgestellten elektrischen Spannung entspricht.

Jede Batterie weist eine Anode, eine Kathode und einen dazwischen angeordneten Separator und einen Elektrolyten mit freibeweglichen Ladungsträgern auf. Als ein derartiger Elektrolyt wird beispielsweise eine Flüssigkeit herangezogen. In einer Alternative ist die Batterie als Festkörperbatterie ausgestaltet, und der der Elektrolyt liegt als Festkörper vor. In diesem Fall tritt bei einem Fehlerfall der Batteriezelle keine Flüssigkeit aus, was eine Sicherheit erhöht. Auch ist es dabei möglich, den Elektrolyten vergleichsweise schmal, nämlich als Membran, auszugestalten, weswegen eine Dicke der Festkörperbatterie verringert ist.

Die Anode und die Kathode, die die Elektroden der Batterie bilden, umfassen üblicherweise einen Träger, der als Stromableiter fungiert. An diesem ist üblicherweise ein Aktivmaterial befestigt, das ein Bestandteil einer auf den Träger aufgebrachten Schicht ist. Hierbei ist es möglich, dass in der Schicht bereits der Elektrolyt vorhanden ist, oder dieser wird nachträglich eingebracht. Zumindest jedoch ist das Aktivmaterial zur Aufnahme der Arbeitsionen, z.B. Li-Ionen, geeignet. Je nach Verwendung als Anode oder Kathode wird ein anderes Material für den Träger und eine unterschiedliche Art des Materials der Schicht verwendet. Zur erleichterten Herstellung der Anode und der Kathode wird die Schicht jeweils in einem zumindest teilweisen verflüssigten Zustand auf den Träger aufgetragen und dort mittels eines Rakels bearbeitet und ein Kalandrierprozess durchgeführt, sodass eine genau definierte Dicke der Schicht realisiert wird. Somit ist es möglich, eine Vielzahl an zueinander im Wesentlichen baugleichen Elektroden zu erstellen.

Der Erfindung liegt die Aufgabe zugrunde, ein besonders geeignetes Verfahren zur Herstellung einer Elektrode einer Batterie und eine besonders geeignete Verfahren zur Herstellung einer Batterie sowie eine besonders geeignete Vorrichtung zur Durchführung eines Verfahrens zur Herstellung einer Elektrode einer Batterie anzugeben, wobei vorteilhafterweise eine Herstellung vereinfacht ist, wobei zweckmäßigerweise ein Gewicht und/oder Materialkosten verringert sind, und wobei eine Herstellungsgeschwindigkeit und/oder eine Robustheit vergrößert ist.

Hinsichtlich des Verfahrens zur Herstellung einer Elektrode wird diese Aufgabe durch die Merkmale des Anspruchs 1, hinsichtlich der Elektrode durch die Merkmale des Anspruchs 8 und hinsichtlich der Vorrichtung durch die Merkmale des Anspruchs 9 erfindungsgemäß gelöst. Vorteilhafte Weiterbildungen und Ausgestaltungen sind Gegenstand der jeweiligen Unteransprüche.

Das Verfahren dient der Herstellung einer Elektrode einer Batterie. Die Batterie ist insbesondere ein galvanisches Element, das vorzugsweise zwei Elektroden aufweist, nämlich eine Anode und eine Kathode. Zwischen diesen ist im Montagezustand zweckmäßigerweise ein Separator angeordnet. Das Verfahren wird beispielsweise zur Herstellung lediglich der Anode oder beispielsweise lediglich zur Herstellung der Kathode verwendet. Zum Beispiel ist lediglich eine der Elektroden der Batterie gemäß dem Verfahren erstellt, oder zweckmäßigerweise beide. Die Batterie weist vorzugsweise einen Elektrolyten auf, der eine Anzahl an freibeweglichen Ladungsträger, zweckmäßigerweise Ionen, bereitstellt. Beispielsweise ist der Elektrolyt ein Bestandteil der Anode und/oder Kathode oder ist zumindest geeignet, sich dort anzulagern und somit von diesen aufgenommen zu werden. Die Batterie ist beispielsweise eine Festkörperbatterie, sodass der Elektrolyt als Festkörper vorliegt. Besonders bevorzugt jedoch ist der Elektrolyt flüssig. Zum Beispiel ist die Batterie eine Sekundärbatterie.

Vorzugsweise ist die Batterie im bestimmungsgemäßen Zustand ein Bestandteil eines Kraftfahrzeugs. Hierfür ist die Batterie geeignet, insbesondere vorgesehen und eingerichtet. Im bestimmungsgemäßen Zustand ist die Batterie beispielsweise ein Bestandteil eines Energiespeichers des Kraftfahrzeugs, der mehrere derartige Batterien/Batteriezellen aufweist. Die Batterien sind insbesondere in einem Gehäuse des Energiespeichers angeordnet und miteinander elektrisch parallel und/oder in Reihe geschaltet. Somit ist die an dem Energiespeicher anliegende elektrische Spannung ein Vielfaches der mittels jeder der Batterien bereitgestellten elektrischen Spannung. Zweckmäßigerweise sind sämtliche Batterien dabei zueinander baugleich, was eine Fertigung vereinfacht. Das Gehäuse ist bevorzugt aus einem Metall gefertigt, beispielsweise einem Stahl, wie einem Edelstahl, oder einem Aluminium und/oder in einem Druckgussverfahren. Insbesondere ist das Gehäuse verschlossen ausgestaltet. Zweckmäßigerweise ist in das Gehäuse eine Schnittstelle eingebracht, die einen Anschluss des Energiespeichers bildet. Die Schnittstelle ist dabei elektrisch mit der Batterie kontaktiert, sodass ein Einspeisen von elektrischer Energie und/oder eine Entnahme von elektrischer Energie aus der Batterie von außerhalb des Energiespeichers möglich ist, sofern an den Anschluss ein entsprechender Stecker gesteckt ist.

Das Kraftfahrzeug ist bevorzugt landgebunden und weist vorzugsweise eine Anzahl an Rädern auf, von denen zumindest eines, vorzugsweise mehrere oder alle, mittels eines Antriebs angetrieben sind. Geeigneterweise ist eines, vorzugsweise mehrere, der Räder steuerbar ausgestaltet. Somit ist es möglich, das Kraftfahrzeug unabhängig von einer bestimmten Fahrbahn, beispielsweise Schienen oder dergleichen, zu bewegen. Dabei ist es zweckmäßigerweise möglich, das Kraftfahrzeug im Wesentlichen beliebig auf einer Fahrbahn zu positionieren, die insbesondere aus einem Asphalt, einem Teer oder Beton gefertigt ist. Das Kraftfahrzeug ist beispielsweise ein Nutzkraftwagen, wie ein Lastkraftwagen (Lkw) oder ein Bus. Besonders bevorzugt jedoch ist das Kraftfahrzeug ein Personenkraftwagen (Pkw).

Mittels des Antriebs erfolgt zweckmäßigerweise eine Fortbewegung des Kraftfahrzeugs. Zum Beispiel ist der Antrieb, insbesondere der Hauptantrieb, zumindest teilweise elektrisch ausgestaltet, und das Kraftfahrzeug ist beispielsweise ein Elektrofahrzeug. Der Elektromotor wird zum Beispiel mittels des Energiespeichers betrieben, der geeigneterweise als eine Hochvoltbatterie ausgestaltet ist. Mittels der Hochvoltbatterie wird zweckmäßigerweise eine elektrische Gleichspannung bereitgestellt, wobei die elektrische Spannung zum Beispiel zwischen 200 V und 800 V und beispielsweise im Wesentlichen 400 V beträgt. Vorzugsweise ist zwischen des Energiespeichers und dem Elektromotor ein elektrischer Umrichter angeordnet, mittels dessen die Bestromung des Elektromotors eingestellt wird. In einer Alternative weist der Antrieb zusätzlich einen Verbrennungsmotor auf, sodass das Kraftfahrzeug als Hybrid-Kraftfahrzeug ausgestaltet ist. In einer Alternative wird mittels des Energiespeichers ein Niedervoltbordnetz des Kraftfahrzeugs gespeist, und mittels des Energiespeichers wird insbesondere eine elektrische Gleichspannung von 12 V, 24 V oder 48 V bereitgestellt.

In einer Alternative ist die Batterie ein Bestandteil eines Flurförderfahrzeug, einer Industrieanlage, eines handgeführten Geräts, wie beispielsweise eines Werkzeugs, insbesondere eines Ackuschraubers. In einer weiteren Alternative ist die Batterie ein Bestandteil einer Energieversorgung und wird dort beispielsweise als sogenannte Pufferbatterie verwendet. In einer weiteren Alternative ist die Batterie ein Bestandteil eines tragbaren Geräts, beispielsweise eines tragbaren Mobiltelefons, oder eines sonstigen Wearables. Auch ist es möglich, eine derartige Batterie im Campingbereich, Modellbaubereich oder für sonstige Outdoor-Aktivitäten zu verwenden.

Das Verfahren sieht vor, dass in einem ersten Arbeitsschritt ein metallischer Träger bereitgestellt wird. Der metallische Träger ist flächig ausgestaltet, sodass dieser im Wesentlichen zweidimensional ist. Zumindest jedoch ist die Ausdehnung in die dritte Dimension, also in die hierzu senkrechte Dimension, kleiner als 1/1000, ein Millionstel der Ausdehnung in die verbleibenden zwei Dimensionen ist, sodass diese im Wesentlichen zu vernachlässigen ist. Der Träger ist in einer Ausdehnungsebene angeordnet. Mit anderen Worten ist die Ausdehnung des Trägers senkrechte aus Ausdehnungsebene zu vernachlässigen oder zumindest vergleichsweise gering, insbesondere geringer als 10 µm. Dahingegen ist die Ausdehnung in der Ausdehnungsebene vorzugsweise größer als 5 cm. Der metallische Träger weist zweckmäßigerweise einen vergleichsweise geringen ohmschen Widerstand auf, und das Metall ist hierfür entsprechend gewählt. Der metallische Träger bildet nach Fertigung insbesondere den Ableiter oder einen der Ableiter der Elektrode, insbesondere der Batterie.

In einem weiteren Arbeitsschritt wird in einen Rand des Trägers eine Struktur senkrecht zur Ausdehnungsebene eingebracht. Die Struktur weist somit Elemente oder zumindest Bereiche auf, die senkrecht zur Ausdehnungsebene bezüglich der weiteren Bestandteile des Trägers, also nicht dem Rand, versetzt sind. Der Rand des Trägers reicht hierbei insbesondere von einer Kante des Trägers in Richtung dessen mittleren Bereichen. Der Rand weist zumindest eine der Kanten des Trägers auf und ist beispielsweise einer oder mehreren Kanten des Trägers zugeordnet. Der Rand ist vorzugsweise durchgängig und die Fläche des Rands ist geeigneterweise geringer als 20 %, 10 % oder 5 % der vollständigen Fläche des Trägers. Insbesondere erstreckt sich der Rand senkrecht zur Kante maximal 10 % der vollständigen Ausdehnung des Trägers senkrecht zu dieser Kante. Der Rest des Trägers, der insbesondere einen Hauptkörper des Trägers bildet, bleibt frei von der Struktur, sodass der Hauptkörper weiterhin flächig ist und in der Ausdehnungsebene angeordnet ist. Zusammenfassend weist der Träger aufgrund der Struktur Bestandteile auf, die zum Rest des Trägers, insbesondere dem Hauptkörper senkrecht zur Ausdehnungsebene versetzt sind. Der Umfang der Versetzung ist zweckmäßigerweise zumindest das Doppelte, Fünffache oder Zehnfache der Ausdehnung des Trägers senkrecht zur Ausdehnungsebene. Geeigneterweise ist die maximale Höhe der Struktur, also die Ausdehnung senkrecht zur Ausdehnungsebene geringer als dem Hundertfachen der Ausdehnung des Trägers senkrecht zur Ausdehnungsebene.

Mittels der Struktur wird eine Steifigkeit des Trägers gegenüber mechanischen Belastungen erhöht und somit eine Torsion oder Biegung des Trägers verhindert oder zumindest reduziert. Hierbei ist eine Erhöhung der Dicke des Trägers, also eine Vergrößerung dessen Ausdehnung senkrecht zur Ausdehnungsebene nicht erforderlich, weswegen kein zusätzliches Gewicht und/oder Materialkosten erforderlich sind, wobei eine nachfolgende Verarbeitung und daher eine Herstellung vereinfacht ist. Da zudem aufgrund der erhöhten Steifigkeit bei der Weiterverarbeitung keine weiteren Vorkehrungen erforderlich sind, um eine Biegung oder Torsion zu vermeiden, ist eine Robustheit erhöht und die Herstellungs-/Prozessgeschwindigkeit kann vergrößert werden. Zusammenfassend ist die Handhabung der Elektrode und daher eine Weiterverarbeitung vereinfacht, da eine Torsion oder Biegung nicht auf andere Weise kompensiert oder verhindert werden muss.

Beispielsweise wird als Elektrode eine Anode verwendet. Hierbei ist der Träger zweckmäßigerweise aus einem Kupfer, vorzugsweise reinem Kupfer, hergestellt. Alternativ hierzu wird als Elektrode eine Kathode verwendet. In diesem Fall ist der Träger zweckmäßigerweise aus einem Aluminium, wie reinem Aluminium oder einer Aluminiumlegierung, gefertigt. Besonders bevorzugt wird das Verfahren sowohl zur Herstellung der Anode als auch der Kathode verwendet, wobei das Material des Trägers entsprechend angepasst wird.

Zum Beispiel ist die Struktur, die eingebracht wird, im Wesentlichen erratisch. Besonders bevorzugt jedoch wiederholt sich die Struktur periodisch. Folglich ist ein Einbringen mit einem entsprechenden Werkzeug vereinfacht. Auch ist auf diese Weise eine Vorhersagbarweise der mechanischen Eigenschaften aufgrund der Struktur gegeben, weswegen mehrere entsprechend hergestellte Elektroden im Wesentlichen zueinander gleichartig sind. Auch weist der auf diese Weise erstellte Träger gemittelt über zumindest eine der Periode stets die gleichen mechanischen Eigenschaften auf.

Vorzugsweise wird auf den Träger ein Aktivmaterial aufgebracht. Als Aktivmaterial wird beispielsweise ein Lithium-Metall-Oxid, wie Lithium-Cobalt(III)-Oxid (LiCoO2), NMC, NCA oder LFP verwendet. Alternativ wird als Aktivmaterial NMC622 oder NMC811 herangezogen. Die Wahl des Aktivmaterials ist hierbei insbesondere abhängig davon, ob die Elektrode die Kathode oder Anode bildet. Das Aktivmaterial wird beispielsweise direkt auf den Träger aufgetragen. Insbesondere jedoch ist das Aktivmaterial ein Bestandteil einer Schicht. Die Schicht umfasst beispielsweise zusätzlich zu dem Aktivmaterial einen Binder, ein Lösungsmittel und/oder Leitruß.

Das Aktivmaterial/die Schicht wird lediglich teilweise auf den Träger aufgebracht. Zumindest der Rand bleibt von dem Aktivmaterial/der Schicht frei. Somit ist der Bereich des Trägers, der die Struktur aufweist, frei von dem Aktivmaterial/der Schicht. Daher weist die Struktur keinen Einfluss auf die elektrischen Eigenschaften der Elektrode auf, und das Aufbringen des Aktivmaterials/der Schicht kann in bewährter Weise erfolgen. Insbesondere wird das Aktivmaterial/die Schicht auf den vollständigen Hauptkörper aufgebracht, sodass der Träger, mit Ausnahme des Rands, vollständig mit dem Aktivmaterial/der Schicht bedeckt ist.

Das Aktivmaterial/die Schicht wird beispielsweise auf den Träger aufgedruckt. Alternativ wird das Aktivmaterial/die Schicht auf den Träger gegossen. Zum Aufbringen des Aktivmaterials/der Schicht wird beispielsweise ein Rakel verwendet. Insbesondere wird die Schichtdicke mittels eines Kalandrierprozesses vorgegeben. Geeigneterweise ist die Dicke des Aktivmaterials / der Schicht, also die Ausdehnung senkrecht zur Ausdehnungsebene, zwischen 40 µm und 100 µm, beispielsweise zwischen 50 µm 80 µm und zum Beispiel im Wesentlichen gleich 60 µm. Somit ist eine Dicke der Elektrode vergleichsweise gering, weswegen eine Leistungsdichte der Batterie erhöht ist.

Beispielsweise wird das Aktivmaterial/die Schicht auf den Träger aufgebracht, nachdem die Struktur in den Rand des Trägers eingebracht wurde. Somit ist der Träger bereits vergleichsweise stabil, wenn das Aktivmaterial/ die Schicht aufgebracht wird, sodass das Aktivmaterial/ die Schicht mittels des Trägers stabilisiert wird. Alternativ hierzu erfolgt das Einbringen der Struktur erst nach Aufbringen des Aktivmaterials/ der Schicht auf den Träger. Somit ist bei dem Aufbringen des Aktivmaterials/ der Schicht noch eine Flexibilität des Trägers gegeben, sodass dieser geeignet verformt werden kann. Folglich ist das Aufbringen des Aktivmaterial/der Schicht vereinfacht. Insbesondere, sofern die Dicke der Schicht/ des Aktivmaterials vergleichsweise gering ist, und beispielsweise unter 100 µm beträgt, ist der auf diese Weise gebildete Verbund vergleichsweise flexibel, sodass dieser beispielsweise auf Rollen gelagert werden kann.

Beispielsweise wird zum Einbringen der Struktur ein zusätzliches Bauteil verwendet, das beispielsweise an dem etwaigen Hauptkörper befestigt wird, beispielsweise mittels Lötens, Schweißens oder Stanzens. Das zusätzliche Bauteil bildet somit den Rand des Trägers. Besonders bevorzugt jedoch ist der Träger einstückig, und der Rand ist insbesondere an dem Hauptkörper angeformt und vorzugsweise einstückig mit diesem. Der Träger wird zur Bereitstellung der Struktur verformt. Zweckmäßigerweise wird somit der Rand verformt. Auf diese Weise sind keine zusätzlichen Bauteile erforderlich, und ein Ablösen des Rands von dem etwaigen Hauptkörper ist sicher vermieden. Auch sind keine zusätzlichen Befestigungsschritte und - Werkzeuge erforderlich, weswegen einerseits eine Herstellungsgeschwindigkeit erhöht. Andererseits ist eine Lagerhaltung vereinfacht, da lediglich das Material für den Träger vorgehalten werden muss, der den Hauptkörper und den Rand bildet. Aufgrund der Verformung ist der auf diese Weise erstellte Träger auch weiterhin einstückig, sodass eine Robustheit erhöht ist.

Beispielsweise wird die Struktur mittels eines Stempels in den Rand eingebracht. Besonders bevorzugt jedoch wird die Struktur mittels einer Walze in den Träger eingebracht. Hierbei wird beispielsweise die Walze über den Träger abgerollt, der festmontiert ist. Besonders bevorzugt jedoch wird der Träger über die Walze geführt. Die Walze ist dabei zweckmäßigerweise drehbeweglich gelagert. Zweckmäßigerweise weist die Walze eine Gegenstruktur auf, die komplementär zu der Struktur ist, die in den Rand eingebracht werden soll. Aufgrund der Verwendung der Walze ist es möglich, den Träger als Bahn bereitzustellen, sodass eine vergleichsweise hohe Prozessgeschwindigkeit und folglich Herstellungsgeschwindigkeit realisiert werden kann.

Zweckmäßigerweise ist zusätzlich eine Gummiwalze vorhanden, die parallel zu der Walze angeordnet ist. Zum Einbringen der Struktur wird der Träger zwischen der Gummiwalze und der Walze hindurchbewegt, wobei der Träger in direktem mechanischem Kontakt mit sowohl der Walze als auch der Gummiwalze ist. Beispielsweise ist die vollständige Gummiwalze oder lediglich deren Umfang aus einem Gummi gefertigt, sodass ein elastisches Eindrücken der Gegenstruktur und des Trägers in die Gummiwalze ermöglicht ist. Somit wird mittels der Gummiwalze sichergestellt, dass der Rand flächig an der Gegenstruktur der Walze anliegt. Aufgrund der Gummiwalze ist daher eine im Wesentlichen gleichbleibende Qualität der Struktur realisiert.

Beispielsweise wird lediglich in einen der Ränder des Trägers die Struktur eingebracht. Somit ist ein vergleichsweise großer Bereich des Trägers frei von der Struktur, welcher anderweitig genutzt werden kann, beispielsweise zum Aufbringen des Aktivmaterial. Besonders bevorzugt jedoch wird in einen weiteren Rand des Trägers eine weitere Struktur senkrecht zur Ausdehnungsebene eingebracht. Auf diese Weise wird der Träger weiter stabilisiert. Beispielsweise ist die weitere Struktur unterschiedlich zu der Struktur oder besonders bevorzugt gleichartig. Auf diese Weise ist eine Herstellung mit Gleichteilen möglich. Das Einbringen der Struktur und der weiteren Struktur erfolgt vorzugsweise zeitgleich, insbesondere mittels der gleichen Walze. Alternativ hierzu wird die Strukturen und die weitere Struktur zeitlich nacheinander in den Träger eingebracht.

Beispielsweise ist hierbei die weitere Struktur unter einem Winkel zu der Struktur angeordnet, zum Beispiel unter einem Winkel von 90°. Somit werden in zwei zueinander senkrechte Ränder die Strukturen eingebracht. Auf diese Weise ist eine Stabilität vergleichsweise hoch. Besonders bevorzugt jedoch wird in einen gegenüberliegenden Rand des Trägers die weitere Struktur eingebracht, sodass auch ein Bearbeiten von bahnenartigen Trägern ermöglicht ist. Zum Beispiel sind die Struktur und die weitere Struktur zueinander im Wesentlichen deckungsgleich, wenn die weitere Struktur in den gegenüberliegenden Rand eingebracht wird. Besonders bevorzugt jedoch sind diese zueinander versetzt, beispielsweise um eine etwaige halbe Periode. Somit ist eine Stabilität weiter erhöht.

Besonders bevorzugt wird als Träger eine Metallfolie herangezogen. Auf diese Weise ist eine Dicke des Trägers vergleichsweise gering, und somit dessen Gewicht. Auch ist auf diese Weise ein Materialbedarf vergleichsweise gering. Insbesondere ist hierbei die Ausdehnung des Trägers senkrecht zur Ausdehnungsebene, in der die (Metall-)Folie angeordnet ist, zwischen 6 µm und 8 µm. Insbesondere wird als Trägern entweder eine Aluminiumfolie oder eine Kupferfolie verwendet. Somit ist der Träger biegeschlaff, sodass diese zunächst vergleichsweise einfach bearbeitet werden kann. Aufgrund der Einbringung der Struktur wird die Schlaffheit kompensiert und der Träger (die Metallfolie) zumindest teilweise stabilisiert, sodass ein nachfolgendes Bewegen und Handling der erstellten Elektrode vereinfacht ist.

Bevorzugt jedoch wird zur Bereitstellung des Trägers die Metallfolie von einer Vorratsrolle abgewickelt. Auf diese Weise ist ein vergleichsweise unkompliziertes Herstellen einer Vielzahl an Elektroden ermöglicht. Die Struktur wird hierbei insbesondere in einen der beiden sich längs der bahnenförmigen Metallfolie erstreckenden Randes des Trägers eingebracht. Somit ist eine Prozessgeschwindigkeit erhöht. Auch ist es möglich, die Metallfolie im Wesentlichen kontinuierlich von der Vorratsrolle abzuholen, sodass eine unterschiedliche Beschleunigung der Vorratsrolle unterbleibt, die zu einem Abreißen führen könnte. Wenn auch die weitere Struktur eingebracht wird, werden die weitere Struktur und die Struktur zweckmäßigerweise in die beiden sich längs der Bahn erstreckenden Ränder der Metallfolie eingebracht. Alternativ wird als Metallfolie Bogenware verwenden. Diese ist insbesondere als Rechteckzuschnitt vorliegend, wobei beispielsweise der vollständige umlaufende Rand mit der Struktur oder gegebenenfalls der weiteren Struktur versehen wird. Alternativ hierzu werden lediglich bestimmte Abschnitte des Randes oder zwei unterschiedliche Ränder, die zweckmäßigerweise unterschiedlichen Kanten zugeordnet sind, mit der Struktur bzw. der weiteren Struktur versehen.

Die Elektrode ist ein Bestandteil einer Batterie. Die Batterie selbst ist zum Beispiel ein Bestandteil eines Kraftfahrzeugs. Insbesondere ist die Batterie ein Bestandteil eines Energiespeichers des Kraftfahrzeugs, zweckmäßigerweise einer Hochvoltbatterie. Die Elektrode weist einen metallischen Träger auf, der zweckmäßigerweise einstückig ist. Der metallische Träger umfasst einen flächigen Hauptkörper, der in einer Ausdehnungsebene angeordnet ist. Zudem umfasst der Träger einen Rand, der sich insbesondere von einer Kante des Trägers zu einer gegenüberliegenden Kante erstreckt, beispielsweise bis zu 10 % der vollständigen Ausdehnung des Trägers in diesem Bereich.

Der Rand weist eine Struktur senkrecht zur Ausdehnungsebene auf. Somit ist der Träger im Bereich des Randes aufgrund der Struktur zumindest teilweise aus der Ausdehnungsebene heraus bewegt, wobei Teile des Randes sich zweckmäßigerweise auch weiterhin in der Ausdehnungsebene befinden. Somit ist der Träger im Bereich der Struktur dreidimensional ausgestaltet, wohingegen der Träger im Bereich des Hauptkörpers im Wesentlichen zweidimensional ausgestaltet ist.

Als Träger wird, wenn die Elektrode die Kathode bilden soll, bevorzugt eine Aluminiumfolie oder, wenn die Elektrode die Anode bilden soll, eine Kupferfolie verwendet. Insbesondere ist auf den Hauptkörper des Trägers eine Schicht mit einem Aktivmaterial aufgebracht, oder zumindest das Aktivmaterial, wobei der Rand zweckmäßigerweise frei von dem Aktivmaterial, vorzugsweise von der vollständigen Schicht ist. Auf der dem Träger gegenüberliegenden Seiten der Schicht/Aktivmaterial ist insbesondere ein Separator aufgebracht, der beispielsweise eine Folie oder eine Membran ist.

Die Vorrichtung dient der Durchführung eines Verfahrens zur Herstellung einer Elektrode einer Batterie. Bei dem Verfahren wird ein in einer Ausdehnungsebene angeordneter flächiger metallischer Träger bereitgestellt, wobei in einen Rand des Trägers eine Struktur senkrecht zur Ausdehnungsebene eingebracht wird. Die Struktur wird dabei mittels einer Walze der Vorrichtung in den Träger eingebracht. Die Vorrichtung ist hierbei zur Durchführung des Verfahrens geeignet, insbesondere vorgesehen und eingerichtet. Vorzugsweise umfasst die Vorrichtung eine Steuereinheit, die vorgesehen und eingerichtet ist, das Verfahren durchzuführen. Insbesondere wird die Vorrichtung zum Durchführen des Verfahrens verwendet.

Die Walze der Vorrichtung ist drehbeweglich gelagert und beispielsweise aus einem Metall oder Hartplastik gefertigt. Zum Beispiel ist die Walze angetrieben, sodass mittels der Walze auch ein Bewegen des Trägers erfolgt. Alternativ hierzu wird bei Bewegen des Trägers über die Walze die Walze gedreht. Die Walze weist eine Gegenstruktur auf, die komplementär zu der Struktur ist, die in den Träger eingebracht werden soll. Bei Bewegen des Trägers entlang/über die Walze wird die Gegenstruktur in den Träger gepresst, sodass sich die Struktur ergibt. Insbesondere wird auch der Hauptkörper entlang der Walze bewegt, wobei die Walze in diesem Bereich zweckmäßigerweise frei von der Gegenstruktur und insbesondere glatt ausgestaltet ist, sodass der etwaige Hauptkörper mittels der Walze nicht verformt, jedoch stabilisiert wird.

Geeigneterweise umfasst die Vorrichtung eine Gummiwalze, die parallel zu der Walze angeordnet ist, und die insbesondere drehbeweglich gelagert ist. Beispielsweise ist die Gummiwalze unangetrieben, oder beispielsweise ebenfalls angetrieben. Die Gummiwalze ist beispielsweise vollständig aus einem Gummi gefertigt oder zumindest partiell oder vollständig mit einem Gummi überzogen. Ferner weist die Vorrichtung eine Zuführvorrichtung auf, die der Zuführung des Trägers zwischen die Walze und die Gummiwalze dient. Die Zuführvorrichtung ist beispielsweise eine Schiene oder die Vorratsrolle, auf der der Träger aufgerollt ist. Mittels der Zuführvorrichtung wird zumindest der Rand des Trägers über die Gegenstruktur der Walze geführt wird. Bei Betrieb der Vorrichtung wird der Träger zwischen der Walze und der Gummiwalze geführt, wobei mittels der Gegenstruktur der Träger, insbesondere der Rand, in die Gummiwalze eingedrückt wird, weswegen der Träger im vorgesehenen Bereich an der Gegenstruktur anliegt, sodass die Struktur komplementär zu der Gegenstruktur erstellt wird. Aufgrund des elastischen Materials der Gummiwalze federt die durch die Gegenstruktur hervorgerufene Verformung nach Weiterdrehen der Gummiwalze aus. Somit ist ein abgestimmtes Bewegen der Gummiwalze bezüglich der Walze nicht erforderlich. Beispielsweise weist die Gummiwalze eine genauso große Ausdehnung wie die Walze auf, oder ist lediglich im Bereich der Gegenstruktur angeordnet und weist somit eine verringerte Ausdehnung auf. Zusammenfassend ist die Zuführvorrichtung geeignet, insbesondere vorgesehen und eingerichtet, den Träger zwischen die Walze und die Gummiwalze zu führen, sodass in den Rand des Trägers die Struktur eingebracht wird.

In einer Ausführungsform ist der Abstand der Walze zu der Gummiwalze konstant. Besonders bevorzugt jedoch ist die Gummiwalze senkrecht zur Anordnungsrichtung transversal gelagert, sodass der Abstand zwischen der Gummiwalze und der Walze variabel ist. Insbesondere ist es möglich, den Abstand zwischen diesen einzustellen. Auf diese Weise ist es möglich, einen Anpressdruck der Gummiwalze an die Walze einzustellen, sodass einerseits eine übermäßige Kraftaufbringung auf den Träger vermieden ist, die beispielsweise zu einem Reißen des Randes führen würde. Andererseits ist auf diese Weise sichergestellt, dass die Struktur im gewünschten Maß in den Rand eingebracht wird. Ferner ist es möglich, die Vorrichtung für unterschiedlich Träger zu verwenden, die beispielsweise aus unterschiedlichen Materialien gefertigt sind und/oder eine unterschiedliche Dicke, also unterschiedliche eine Ausdehnung senkrecht zur Anordnungsebene, aufweisen.

Die Erfindung betrifft ferner eine Batterie mit einer beschriebenen Elektrode, wie einer Kathode oder Anode. Der Träger der Elektrode weist dabei den Rand mit der Struktur auf. Somit sind ein Abtrennen und daher ein zusätzlicher Arbeitsschritt nicht erforderlich. Daher ist eine Herstellungszeit nicht erhöht. Andererseits wird auf diese Weise eine Stabilität der Batterie erhöht. Vorzugsweise wird eine derartige Batterie in einem Kraftfahrzeug verwendet und ist beispielsweise ein Bestandteil einer Hochvoltbatterie. Somit betrifft die Erfindung auch die Verwendung einer derartigen Batterie sowie eine Hochvoltbatterie. Die Hochvoltbatterie ist ein Bestandteil eines Kraftfahrzeugs. Das Kraftfahrzeug ist bevorzugt landgebunden und weist vorzugsweise eine Anzahl an Rädern auf, von denen zumindest eines, vorzugsweise mehrere oder alle, mittels eines Antriebs angetrieben sind. Geeigneterweise ist eines, vorzugsweise mehrere, der Räder steuerbar ausgestaltet. Somit ist es möglich, das Kraftfahrzeug unabhängig von einer bestimmten Fahrbahn, beispielsweise Schienen oder dergleichen, zu bewegen. Dabei ist es zweckmäßigerweise Weise möglich, das Kraftfahrzeug im Wesentlichen beliebig auf einer Fahrbahn zu positionieren, die insbesondere aus einem Asphalt, einem Teer oder Beton gefertigt ist. Das Kraftfahrzeug ist beispielsweise ein Nutzkraftwagen, wie ein Lastkraftwagen (Lkw) oder ein Bus. Besonders bevorzugt jedoch ist das Kraftfahrzeug ein Personenkraftwagen (Pkw).

Die im Zusammenhang mit dem Verfahren beschriebenen Vorteile und Weiterbildungen sind sinngemäß auch auf die Elektrode/die Vorrichtung/die Batterie/die Verwendung und das Kraftfahrzeug sowie untereinander zu übertragen und umgekehrt.

Nachfolgend werden Ausführungsbeispiele der Erfindung anhand einer Zeichnung näher erläutert. Darin zeigen:
- Fig. 1: schematisch vereinfacht ein Kraftfahrzeug, das eine Hochvoltbatterie mit mehreren Batterien aufweist,
- Fig. 2: schematisch in einer Schnittdarstellung eine der Batterien, die zwei Elektroden mit jeweils einem Träger umfasst,
- Fig. 3: ein Verfahren zur Herstellung einer der Elektroden,
- Fig. 4: in einer Seitenansicht schematisch eine Vorrichtung zur Durchführung des Verfahrens,
- Fig. 5: die Vorrichtung in einer Draufsicht,
- Fig. 6: in einer Draufsicht den erstellten Träger, der einen Hauptkörper und einen Rand mit einer Struktur aufweist
- Fig. 7 -11: jeweils unterschiedliche Längsschnitte des Randes,
- Fig. 12: in einer Draufsicht eine Abwandlung des in Fig. 6 gezeigten Trägers, und
- Fig. 13, 14: jeweils in einer Draufsicht weitere Varianten des Trägers.

Einander entsprechende Teile sind in allen Figuren mit den gleichen Bezugszeichen versehen.

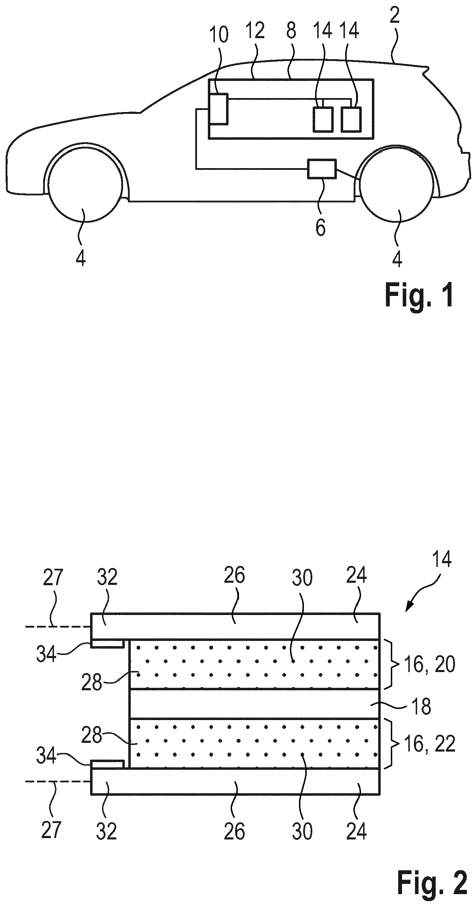

In Figur 1 ist schematisch vereinfacht ein Kraftfahrzeug 2 in Form eines Personenkraftwagens (Pkw) dargestellt. Das Kraftfahrzeug 2 weist eine Anzahl an Rädern 4 auf, von denen zumindest einige mittels eines Antriebs 6 angetrieben sind, der einen Elektromotor umfasst. Somit ist das Kraftfahrzeug 2 ein Elektrofahrzeug oder ein Hybrid-Fahrzeug. Der Antrieb 6 weist ferner einen Umrichter auf, mittels dessen der Elektromotor bestromt ist. Der Umrichter des Antriebs 6 wiederum ist mittels eines Energiespeichers 8 in Form einer Hochvoltbatterie bestromt. Hierfür ist der Antrieb 6 mit einer Schnittstelle 10 des Energiespeichers 8 verbunden, die in ein Gehäuse 12 des Energiespeichers 8 eingebracht ist, das aus einem Edelstahl erstellt ist. Innerhalb des Gehäuses 12 sind mehrere Batterien 14 angeordnet, von denen zwei dargestellt sind. Die Batterien 14 sind zu mehreren, nicht dargestellten Modulen zusammengefasst. Die Batterien 14 jedes Moduls sind dabei teilweise elektrisch in Reihe und zueinander parallel geschaltet und in einem gemeinsamen Gehäuse angeordnet. Die Module wiederum sind miteinander elektrisch kontaktiert, wobei ein Teil der Module zueinander elektrisch in Reihe und diese wiederum elektrisch zueinander parallel geschaltet sind. Der elektrische Verband der Module und somit auch der Batterien 14 ist mit der Schnittstelle 10 elektrisch kontaktiert, sodass bei Betrieb des Antriebs 6 ein Entladen der Batterien 14 erfolgt. Aufgrund der elektrischen Verschaltung ist dabei die an der Schnittstelle 10 bereitgestellte elektrische Spannung, die 400 V beträgt, ein Vielfaches der mit den zueinander baugleichen Batterien 14 jeweils bereitgestellten elektrischen Spannung.

In Figur 2 ist in einer Schnittdarstellung eine der zueinander baugleichen Batterien 14 dargestellt. Die Batterie weist Elektroden 16 auf, die über einen Separator 18 voneinander getrennt sind. Die beiden Elektroden 16 und der Separator 18 sind übereinandergestapelt und liegen jeweils direkt aneinander an. Eine der Elektroden 16 ist eine Anode 20, und die verbleibenden der Elektroden 16 ist eine Kathode 22.

Die beiden Elektroden 16 sind zueinander gleichartig aufgebaut und weisen jeweils einen Träger 24 auf, der aus einer Metallfolie gefertigt ist. Im Fall der Anode 20 ist der Träger 24 aus einer Kupferfolie und im Fall der Kathode 22 aus einer Aluminiumfolie gefertigt. Jeder Träger 24 weist einen Hauptkörper 26 auf, die beide zueinander deckungsgleich sind, und im Wesentlichen die gleiche Ausdehnung wie der Separator 18 aufweisen. Die beiden Hauptkörper 26 sind jeweils in einer zugeordneten Ausdehnungsebene 27 angeordnet, die zueinander parallel, jedoch voneinander beabstandet sind. Die Dicke jedes Trägers senkrecht zur jeweiligen Ausdehnungsebene ist dabei 8µm.

Auf jeden Hauptkörper 26 ist jeweils eine Schicht 28 aufgetragen, die jeweils ein Aktivmaterial 30 enthält. Als Aktivmaterial 30 wird dabei in einer Ausführung NMC verwendet. Jede der Schichten 28 umfasst ferner einen nicht näher dargestellten der Binder sowie ein Lösungsmittel und Leitruß. Die beiden Schichten 28 sind zwischen dem Separator 18 und dem jeweiligen Träger 24 angeordnet und an diesem befestigt. Das Aufbringen der Schicht 28 erfolgt beispielsweise mittels Druckens oder Gießens, wobei bei dem Gießvorgang das Material der Schicht 28 mittels eines Rakels verteilt und mittels eines Kalandrierprozesses die gewünschte Dicke eingestellt wird. Die Dicke jeder der Schichten 28 ist hierbei im Wesentlichen 60 µm.

Jeder der Träger 24 weist ferner einen Rand 32 auf, der über die jeweilige Schicht 28 übersteht und somit frei von der Schicht 28 und dem jeweiligen Aktivmaterial 30 ist. Die beiden Ränder 32 stehen hierbei auf der gleichen Seite bezüglich der Schichten 28 über und sind somit zueinander gegenüber angeordnet. Jeder der Ränder 32, die jeweils einstückig mit dem jeweiligen Hauptkörper 26 sind, ist aufgrund der jeweiligen Struktur 34 senkrecht zur jeweiligen Ausdehnungsebene 27 verformt, sodass der jeweilige Rand 32, im Vergleich zum jeweiligen flächigen, im Wesentlichen zweidimensionalen Hauptkörper 26, dreidimensional ausgeprägt ist. Die Verformung des Randes 32, also die Ausdehnung der Struktur 34, senkrecht zur jeweiligen Ausdehnungsebene 27 ist zwischen 15 µm und 40 µm. Aufgrund der jeweiligen Struktur 34 wird die jeweilige Elektrode 16 stabilisiert, sodass eine Torsion und/oder Biegung der Elektrode 16 vermieden ist. Aufgrund der Struktur 34 ist somit ein Anordnen der beiden Elektroden 16 zueinander und bezüglich des Separators 18 und das Befestigen dieser aneinander erleichtert. Der Rand 32 stellt jeweils zwischen 2% und 10%, nämlich in diesem Beispiel 5 %, der Fläche des vollständigen Trägers 24 dar.

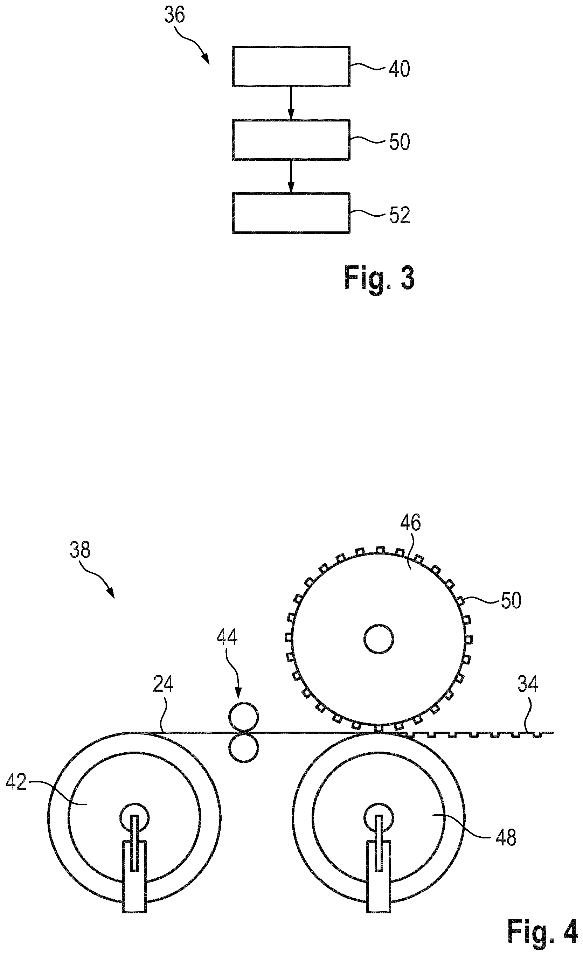

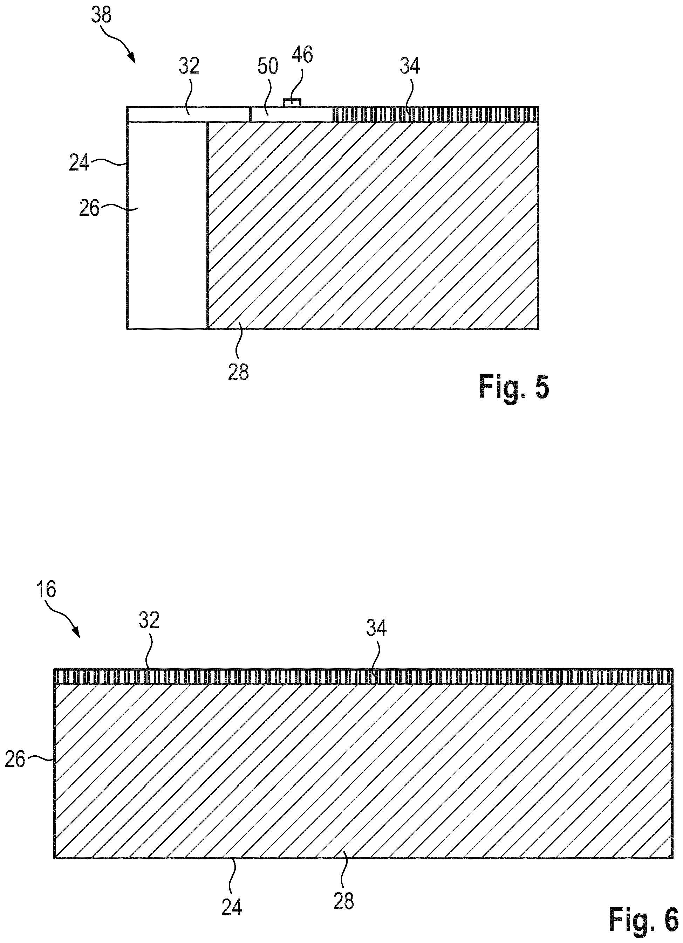

In Figur 3 ist ein Verfahren 36 zur Herstellung einer der Elektroden 16 dargestellt, wobei hierfür eine in Figur 4 in einer Seitenansicht und in Figur 5 in einer Draufsicht teilweise dargestellte Vorrichtung 38 verwendet wird, die als Perforationseinheit dient. Somit ist die Vorrichtung 38 geeignet, vorgesehen und eingerichtet, das Verfahren 36 durchzuführen.

In einem ersten Arbeitsschritt 40 wird der jeweiligen Träger 24 bereitgestellt, der noch flächig ausgestaltet ist, und der somit im Wesentlichen zweidimensional ist. Hierfür wird eine Vorratsrolle 42 verwendet, auf die der Träger 24, der die jeweilige Metallfolie ist, aufgewickelt ist. Mittels einer Zugführervorrichtung 44 ist es möglich, den Träger 24 von der Vorratsrolle 42 abzuwickeln und zwischen eine Walze 46 und eine Gummiwalze 48 zuführen, die vollständig aus einem Gummi hergestellt ist. In einer Alternative hierzu ist Gummiwalze 28 lediglich umfangsseitig mit einem Gummi überzogen. Die Walze 46 und die Gummiwalze 48 sind zueinander parallel angeordnet sowie parallel zu der Ausdehnungsebene 27 des Trägers 24, die mittels der Zuführvorrichtung 44 vorgegeben wird. Dabei ist sowohl die Walze 46 als auch die Gummiwalze 48 drehbeweglich gelagert, wobei die Walze 46 zusätzlich angetrieben ist. Die Walze 46 weist eine zahnartige Gegenstruktur 50 auf, die in deren Umfang eingebracht ist. Die Gummiwalze 48 ist senkrecht zur Anordnungsrichtung der Gummiwalze 48 und der Walze 46 transversal verschieblich gelagert, sodass der Abstand zwischen der Gummiwalze 48 und der Walze 46 eingestellt werden kann. Dabei wird der Abstand auf die Dicke der jeweiligen Metallfolie, also des Trägers 24, eingestellt.

Ferner weist die Vorrichtung 38 einen nicht näher dargestellte Aufbringvorrichtung zum Aufbringen der Schicht 28 auf den Träger 28 auf, welche zwischen der Vorratsrolle 42 und der Walze 46 angeordnet ist. Die Aufbringvorrichtung umfasst einen Druckkopf oder eine Gießvorrichtung, wobei zusätzlich ein Rakel und eine Einheit zum Kalandrieren vorhanden ist.

In einem zweiten Arbeitsschritt 50 des Verfahrens 36 wird mittels der Aufbringvorrichtung die Schicht 28 auf den Träger 24 aufgebracht, wobei der Hauptkörper 26 vollständig mit der Schicht 28 bedeckt wird. Dabei verbleibt der Rand 32 frei von der Schicht 28 und somit auch von dem Aktivmaterial 30. Aufgrund des biegeschlaffen Trägers 24 ist dabei das Aufbringen der Schicht 28 erleichtert.

In einem sich anschließenden dritten Arbeitsschritt 52 wird mittels der Zuführvorrichtung 44 der mittels der Schicht 28 versehene Träger 24 zwischen die Walze 46 und die Gummiwalze 48 geführt, wobei der Abstand der Gummiwalze 48 zu der Walze 46 auf die Dicke des Trägers 24 eingestellt ist. Die Gegenstruktur 50 der Walze 46 drückt den Rand 32 des Trägers 24 gegen die Gummiwalze 48, die im Bereich der Zähne nachgibt, sodass die Metallfolie sich an die Zähne der Gegenstruktur 50 anschmiegt. Folglich wird mittels der Walze 46 der Rand 32 des Trägers 24 verformt, sodass sich die Struktur 34 ergibt. Mit anderen Worten wird die Struktur 34 mittels der Walze 46 im Zusammenwirken mit der Gummiwalze 48 in den Träger 24 eingebracht. Nach Verlassen des Bereichs zwischen der Walze 46 und der Gummiwalze 48 weist somit der Rand 32 die Struktur 34 auf.

In Figur 6 ist die auf diese Weise erstellte und als Band vorliegende Elektrode 16 dargestellt. Auch ist es möglich mehrere derartige Elektroden 16 aus einer einzigen Metallfolie mittels der Vorrichtung 38 zu fertigen, wobei zur Erstellung der Elektroden 16 nach Passieren der Walze 46 und der Gummiwalze 48 mittels einer nicht näher dargestellten Schneidvorrichtung die mit der Schicht 28 versehene Metallfolie auf die gewünschte Länge der Elektroden 16 Menge abgelängt wird.

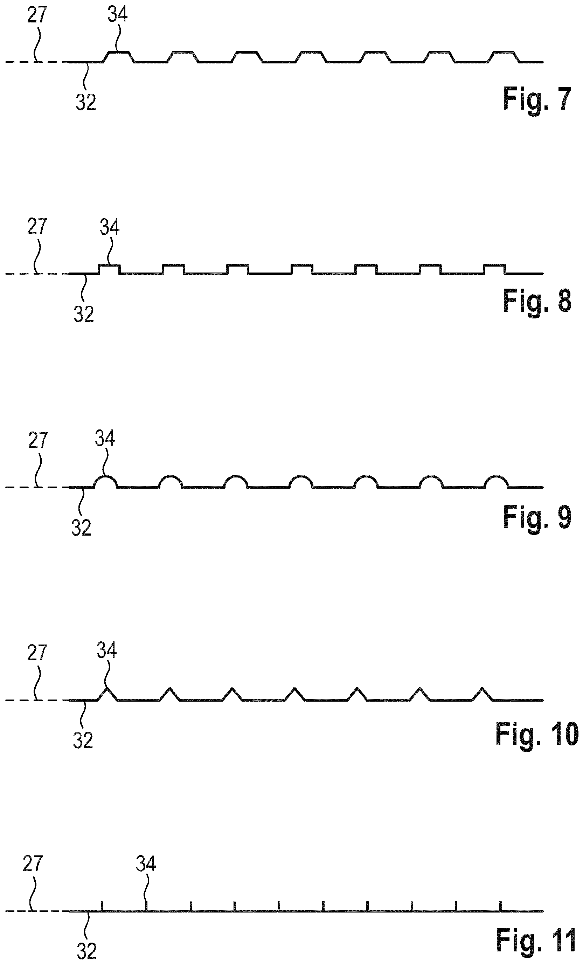

Aufgrund des Einbringens der Struktur 34 weist der Rand 32 längs der Metallfolie einen in Figur 7 gezeigten Längsschnitt auf. Die Struktur 34 ist mittels in den Rand 32 eingebrachten Sicken realisiert, die trapezförmig sind. Hierfür ist in die Gegenstruktur 50 der Walze 46 entsprechend angepasst.

In Figur 8 ist eine alternative Ausgestaltung gezeigt, bei der die Struktur 34 mittels Kastensicken gebildet ist. In Figur 9 ist eine weitere Abwandlung gezeigt, wobei die Struktur 34 mittels Halbrundsicken gebildet ist. In Figur 10 ist die Struktur 34 in einer weiteren Abwandlung mittels Dreieckssicken gebildet. In Figur 11 ist die Struktur 34 kammartig ausgebildet. Zur Erreichung der unterschiedlichen Strukturen 34 ist jeweils die Gegenstruktur 50 entsprechend angepasst. Hierbei ist jedes Mal aufgrund der Strukturen 34 ein Teil des Trägers 24 senkrecht aus der Ausdehnungsebene 27 herausbewegt.

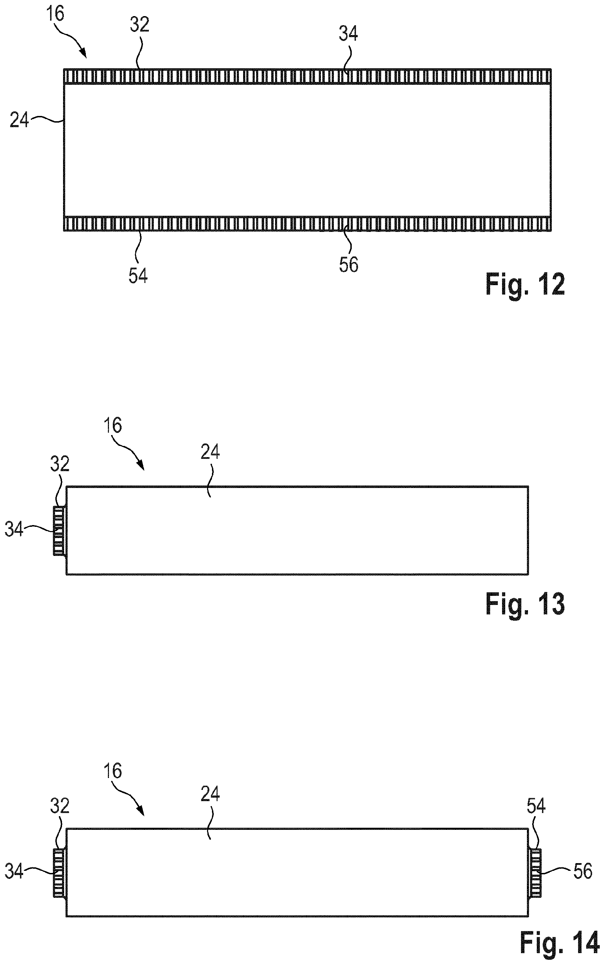

In Figur 12 ist eine Variante des Trägers 24 dargestellt. Es ist auch weiterhin in den Rand 32 die Struktur 34 eingebracht. Jedoch ist auch in einen dem Rand 32 gegenüberliegenden Rand 54 eine weitere Struktur 56 eingebracht, die gleichartig zu der Struktur 34 ist. Die weitere Struktur 56 wird ebenfalls mittels der Walze 46 in den Träger 24 eingebracht, wobei die Walze 46 entlang deren Anordnungsrichtung entsprechend verlängert ist, sodass diese auch mechanisch direkt an dem gegenüberliegenden Rand 54 anliegt.

In Figur 13 ist eine alternative des Trägers 24 dargestellt. Hierbei erstreckt sich der Rand 32, und somit auch nicht die Struktur 34, nicht über die vollständige Länge des Trägers 24. Diese Variante wird bevorzugt verwendet, falls der Träger 24 nicht mittels der Vorratsrolle 42 bereitgestellt wird, sondern als Bogenware vorliegt.

In Figur 14 ist eine Abwandlung der in Figur 13 dargestellten Variante des Trägers 24 gezeigt. Hier ist zusätzlich die weitere Struktur 56 vorhanden, die in den dem Rand 32 gegenüberliegenden Rand 54 eingebracht wurde. Auf diese Weise wird die als Bogenware vorliegende Metallfolie weiter stabilisiert.

In einer weiteren Alternative wird der Rand 32 sowie der etwaigen gegenüberliegenden Rand 54 der in Figur 13 bzw. 14 dargestellten Variante des Trägers 24 mittels eines separaten Bauteils gebildet, das an dem jeweiligen Hauptkörper 26 befestigt wird, beispielsweise mittels Stanzen oder Schweißens.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebenen Einzelmerkmale auch auf andere Weise miteinander kombinierbar, ohne den Gegenstand der Erfindung zu verlassen.

### Bezugszeichenliste

- 2: Kraftfahrzeug
- 4: Rad
- 6: Antrieb
- 8: Energiespeicher
- 10: Schnittstelle
- 12: Gehäuse
- 14: Batterie
- 16: Elektrode
- 18: Separator
- 20: Anode
- 22: Kathode
- 24: Träger
- 26: Hauptkörper
- 27: Ausdehnungsebene
- 28: Schicht
- 30: Aktivmaterial
- 32: Rand
- 34: Struktur
- 36: Verfahren
- 38: Vorrichtung
- 40: erster Arbeitsschritt
- 42: Vorratsrolle
- 44: Zuführvorrichtung
- 46: Walze
- 48: Gummiwalze
- 50: zweiter Arbeitsschritt
- 52: dritter Arbeitsschritt
- 54: gegenüberliegender Rand
- 56: weitere Struktur

## Patentansprüche

1. Verfahren (36) zur Herstellung einer Elektrode (16) einer Batterie (14), bei welchem
- ein in einer Ausdehnungsebene (27) angeordneter flächiger metallischer Träger (24) bereitgestellt wird,
- in einen Rand (32) des Trägers (24) eine Struktur (34) senkrecht zur Ausdehnungsebene (27) eingebracht wird.

2. Verfahren (36) nach Anspruch 1, **dadurch gekennzeichnet, dass** auf den Träger (24) ein Aktivmaterial (30) teilweise aufgebracht wird, wobei der Rand (32) frei von dem Aktivmaterial (30) verbleibt.

3. Verfahren (36) nach Anspruch 1 oder 2, **dadurch gekennzeichnet, dass** der Träger (24) zur Bereitstellung der Struktur (34) verformt wird.

4. Verfahren (36) nach Anspruch 3, **dadurch gekennzeichnet, dass** die Struktur (34) mittels einer Walze (46) in den Träger (24) eingebracht wird.

5. Verfahren (36) nach einem der Ansprüche 1 bis 4, **dadurch gekennzeichnet, dass** in einen gegenüberliegenden Rand (54) des Trägers (24) eine weitere Struktur (56) senkrecht zur Ausdehnungsebene (27) eingebracht wird.

6. Verfahren (36) nach einem der Ansprüche 1 bis 5, **dadurch gekennzeichnet, dass** als Träger (24) eine Metallfolie herangezogen wird.

7. Verfahren (36) nach Anspruch 6, **dadurch gekennzeichnet, dass** zur Bereitstellung des Trägers (24) die Metallfolie von einer Vorratsrolle (42) abgewickelt wird.

8. Elektrode (16) einer Batterie (14), welche einen metallischen Träger (24) aufweist, der einen in einer Ausdehnungsebene (27) angeordneten flächigen Hauptkörper (26) umfasst, und der einen Rand (32) mit einer Struktur (34) senkrecht zur Ausdehnungsebene (27) aufweist.

9. Vorrichtung (38) zur Durchführung eines Verfahrens (36) nach Anspruch 4, die eine drehbeweglich gelagerte Walze (46) mit einer Gegenstruktur (50) und eine parallel hierzu angeordnete drehbeweglich gelagerte Gummiwalze (48) sowie eine Zuführvorrichtung (44) zur Zuführung des Trägers (24) zwischen die Walze (46) und die Gummiwalze (48) aufweist.

10. Vorrichtung (38) nach Anspruch 9, **dadurch gekennzeichnet, dass** die Gummiwalze (48) senkrecht zur Anordnungsrichtung transversal gelagert ist.
